# EUROPEAN PATENT APPLICATION

(11) **EP 1 081 621 A2**
(43) Date of publication of application: **07.03.2001**
(21) Application number: 00307169.3
(22) Date of filing: 21.08.2000
(51) Int. Cl.: G06F 17/60

(54) **Advertising message during setup to an internet provider through a digital switching network**

(30) Priority: 31.08.1999 US 386998
(71) Applicant: LUCENT TECHNOLOGIES INC., Murray Hill, New Jersey 07974-0636 (US)
(72) Inventor: Chavez, David L., Jr., Thornton, Colorado 80241 (US); Thieler, Stephen M., Boulder, Colorado 80301 (US)
(74) Representative: Williams, David John

(57) **Abstract**

Transmitting to a user an advertisement when the user is initially establishing communication with an Internet provider via a digital switching system. A server within the digital switching system transmits the advertisement. This advertisement may take a multitude of forms including a multimedia message that includes sound and video. In addition, when the user transfers from one web site to another web site, a server within the digital switching system responds to this action by transmitting an advertisement to the user until the new web site responds. The digital switching system may be a broadband hybrid optical cable digital switching system. In addition, the digital switching system may also be an all digital fiber system which provides optical fiber directly to the home or office of the user. The server in the digital switching network can send additional information if a customer indicates during the transmission of an advertisement that they wish additional information from the advertiser. The ability of an advertiser to pinpoint the recipients of their advertisements so precisely will make the capability extremely valuable for advertisers.

## Description

### Technical Field

This invention relates to data switching, and, in particular, to the provision of paid advertisements during a service request to an Internet Provider.

### Background of the Invention

Within the prior art, Internet service may be provided to a home or a small business directly through the public telephone network or may be provided via a broadband hybrid fiber cable digital system such as is currently being offered by cable companies such as TCI and Media One. It is well known within the art that once a connection has been made to an Internet provider either via the public telephone switching network or a broadband hybrid fiber cable digital system that the Internet provider transmits advertisements to the user. One such Internet provider is Net Zero that permanently displays an advertisement on the screen of the user. In addition, various web sites offer a multitude of advertisements for different products and services. Whereas, this prior art method of advertising on the Internet provides a source of revenue for the operators of web sites and Internet providers, it does not provide any revenue for the broadband hybrid fiber cable digital switching network provider such as TCI. Indeed, the only source of revenue for the broadband hybrid fiber cable digital switching network provider is in the monthly charge that is charged to the user. In an environment where the users can choose to obtain their Internet communication service via the public switching network or other mechanisms, the providers of the broadband hybrid optical cable service are limited in their revenues.

Users of the present Internet providers have grown accustom to a delay when they are establishing communication with their Internet provider and when they are requesting communication with a new web site. During such delays, the user's terminal displays either a connection request screen to the Internet provider or information from the last web site on which the user was working. Both of these types of information have no value to the user.

The aforementioned utilization of the times during which communication is being established and a user is transferring to a new web site do not generate additional revenue toward the Internet provider nor for the digital switching network provider.

### Summary of the Invention

This invention is directing to solving these and other problems and shortcomings of the prior art. Illustratively according to the invention, when the user is initially establishing communication with an Internet provider via a digital switching system, a server within the digital switching system transmits to the user an advertisement. Advantageously, this advertisement may take a multitude of forms including a multimedia message that includes sound and video. In addition, when the user transfers from one web site to another web site, a server within the digital switching system responds to this action by transmitting an advertisement to the user until the new web site responds. Advantageously, the digital switching system may be a broadband hybrid optical cable digital switching system. In addition, the digital switching system may also be advantageously an all digital fiber system which provides optical fiber directly to the home or office of the user.

Advantageously, the customers connected via terminals to the digital switching system may be grouped into a plurality of classes with each class being based on the social demographics of the customer plus other criteria. Advantageously, each customer may be considered as an individual and the advertisements are placed on the basis of an individual or a group based on the desires of the advertisers. For example, older couples tend to eat out more frequently than couples with young children. Hence, the server in the digital switching system would direct advertisements for finer restaurants to the older couples and advertisements for fast foods (specializing in children) to the younger couples. If the customers were divided into classes for the purpose of directing advertisements to these customers, a large number of classes could be created. For a particular advertisement, the advertisement could be directed to more than one class. The identification of the customers by social demographics and other criteria allows advertisers to pinpoint the audiences to which their advertisements will go. Advantageously, the server in the digital switching network could send additional information if a customer indicates during the transmission of an advertisement that they wish additional information from the advertiser. The ability of an advertiser to pinpoint the recipients of their advertisements so precisely will make the capability extremely valuable for advertisers. Advantageously, different advertisements will be directed to the same class or individual depending on the time of day and the desires of the advertisers.

These and other features and advantages of the present invention will become apparent from the following description of illustrative embodiments of the invention considered together with the drawing.

### Brief Description of the Drawing

FIG. 1 illustrates, in block diagram form, a illustrative embodiment of the invention;
FIG. 2 illustrates, in block diagram form, greater details of a broadband hybrid optical cable digital switching system;
FIG. 3 illustrates, in block diagram form, a terminal utilized by a user of a digital switching system; and
FIGS. 4 and 5 illustrate, in flowchart form, the steps performed by a digital switching system in implementing the embodiment of the invention.

### Detailed Description

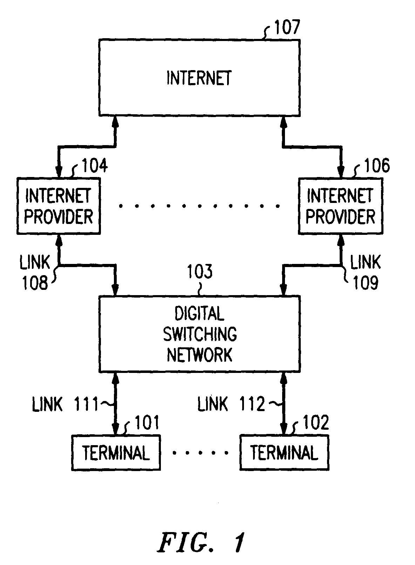

FIG. 1 illustrates an embodiment of the invention. Digital switching network 103 provides switch paths for terminals 101-102 to Internet Providers 104-106. The Internet Providers then provide Internet access for terminals 101-102 to Internet 107. Digital switching network 103 is an all-digital data network that provides service to homes and businesses. One example of digital switching network 103 is the switching facilities based on cable facilities originally intended for providing television programming. In addition, digital switching network 103 could be an all-fiber optics network wherein the optical fiber cable extends to the homes and small businesses. Digital switching network 103 could also be a satellite system.

One of the problems in utilizing the Internet at this time is the delay time before an Internet Provider responds to an initial service request and the time that it takes to reach various web sites via Internet 107. Digital switching network 103 is responsive to an initial service request from one of terminals 101-102 to process that service request by attempting to establish a connection with the designated Internet Provider and by transmitting an advertisement in the form of a text message or a multi-media message that includes video and voice to the requesting terminal. When the Internet Provider responds to the initial service request, digital switching network 103 removes the advertisement and completes the connection between the requesting terminal and the designated Internet Provider.

Advantageously, digital switching network 103 monitors the communication between the terminal and the Internet Provider and detects when the user of the terminal has selected a new web site. Upon detection of a new web site, digital switching network 103 again transmits an advertisement to the terminal until the new web site responds to the request of the user of the terminal and digital switching network 103 detects this response.

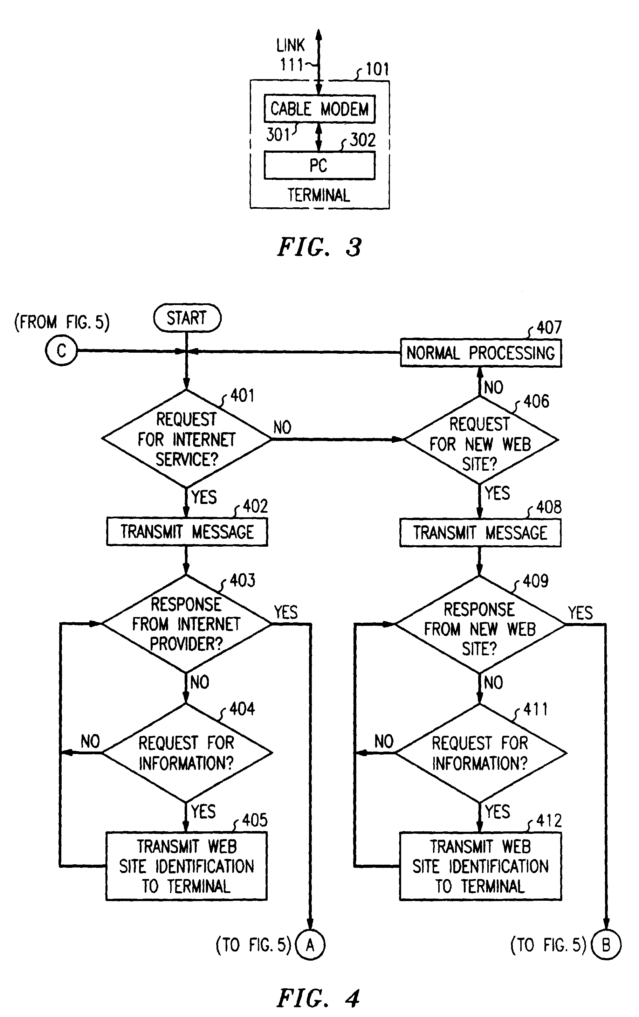

The server in the digital switching system can also determine, when during the advertisement, that the user has indicated that they would like to receive additional information concerning the advertisement. When such an indication is determined, the server transmits to the user's terminal the web site that provides to the user additional information concerning the advertisement. This web site may be maintained by the digital switching network provider or by the advertiser. The indication received from the customer would be performed in a manner well known to those skilled in the art for interacting with Internet browsers such as using a selectable icon as part of the advertisement. To send the additional information, the server starts execution of a Java script and uses the Java script to initiate a new window of the browser in which is placed the additional information. Advantageously, the Java script can be used to maintain a selectable icon that will direct the user to the web site having the additional information. Also, the Java script can be advantageously used to insert a bookmark into the browser of user pointing to the web site having the additional information. Also, if the terminal is a digital television with integrated web capability (as is described with respect to FIG. 3), the advertisement and additional information can be transmitted as an independent data stream to the digital television separate from the Internet communications.

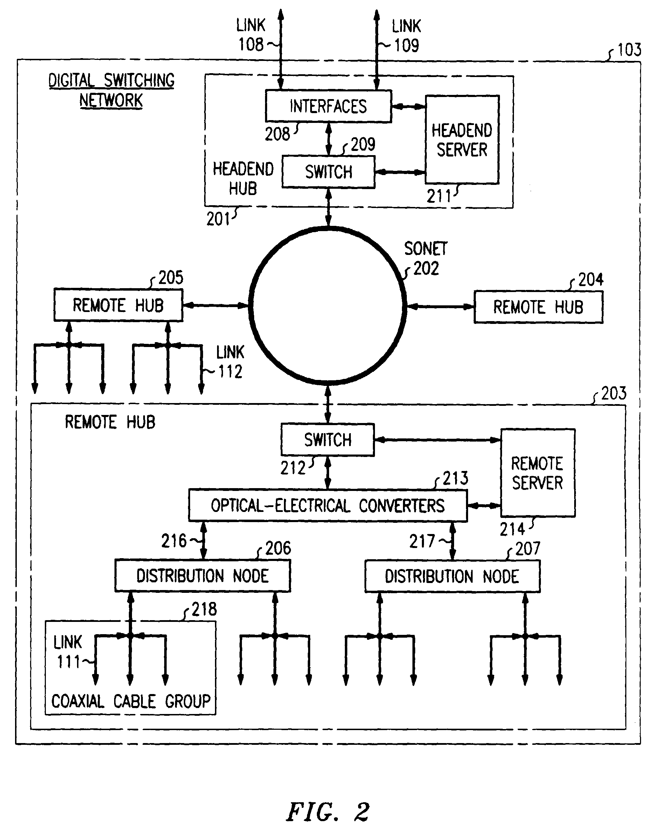

FIG. 2 illustrates, in block diagram form, a broadband hybrid fiber cable implementation of digital switching network 103. Such a network is well known to those skilled in the art. In FIG. 2, digital switching network 103 comprises remote hubs 203-205 interconnected via Sonet network 202 to headend hub 201. Headend hub 201 provides the connections via links 108-109 to Internet providers 104-106. As illustrated in FIG. 1, links 108-109 are connected directly to Internet providers 104-106, respectfully. One skilled in the art could readily envision that digital switching network 103 could be interconnected via the public telephone network or other switching apparatuses to Internet providers 104-106. Headend hub 201 comprises headend server 211 that provides the overall control of the hub and switch 209 that communicates information via Sonet 202 and interfaces 208. Headend server 211 is interconnected to switch 209 for purposes of monitoring communications to the Internet providers and for inserting information that is to be transmitted to the remote hubs or to customer terminals interconnected to digital switching network 103.

Remote hub 203 comprises switch 212 that controls communication between optical-electrical converters 213 and Sonet network 202 under the control of remote server 214. Remote server 214 is interconnected to the optical-electrical converters and to switch 212 to provide control and also to monitor communication between terminals and the Internet providers. Optical-electrical converters 213 convert electrical information being communicated with switch 212 and optical information being received over links 216-217. Interconnected to remote hub 203 via optical links 216-217 are distribution nodes 206-207. Distribution node 206 performs the conversion between optical information communicated via optical link 106 and electrical information communicated with coaxial cable groups such as coaxial cable group 218. Each coaxial cable group provides a communication path to and from terminals such as terminal 101 which is connected to link 111 of coaxial cable group 218. The operations performed by the elements illustrated in FIG. 2 are well known in the art. Either headend server 211 or remote server 214 (or another remote server in a remote hub) can perform the operations previously described with respect to a server in digital switching network 103. Remote hubs 204 and 205 are similar in design to remote hub 203.

FIG. 3, illustrates in block diagram form, terminal 101. The other terminals are similar in design. Terminal 101 consists of cable modem 301 which provides communication with link 111 and personal computer (PC) 302. One skilled in the art could readily envision that devices other than a personal computer could be interconnected via cable modem 301 to link 111. Also, the terminal can be a digital television with integrated web capability and be capable of providing simultaneously both Internet communications and separate video programming as is well known to those skilled in the art.

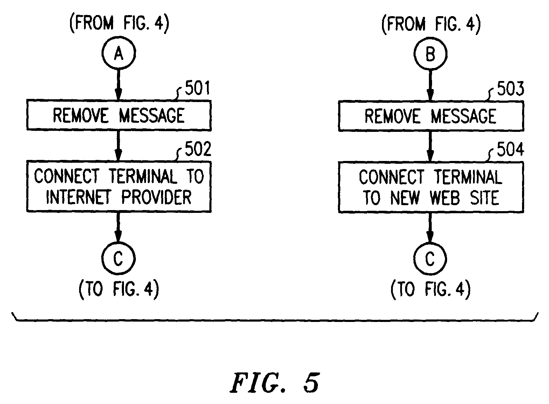

FIGS. 4 and 5 illustrate, in flow chart form, the steps performed by a server within digital switching network 103. Once started, decision block 401 determines if the terminal is requesting Internet service. If the answer is yes, block 402 transmits the advertisement message to the terminal before transferring control to decision block 403. Decision block 403 determines if the Internet provider has responded. If the answer is no in decision block 403, decision block 404 determines if the user has requested additional information concerning the advertisement message. If the answer is no, control is transferred back to decision block 403. If the answer is yes in decision block 404, block 405 transmits the web site identification information to the terminal before transferring control back to decision block 403.

If the answer in decision block 403 is yes, control is transferred to block 501 of FIG. 5 that removes the message from the terminal and transfers control to block 502. Block 502 connects the terminal to the Internet provider before transferring control back to decision block 401 of FIG. 4.

Returning to decision block 401 of FIG. 4, if the answer is no, control is transferred to decision block 406 that determines if the terminal is requesting a new web site. If the answer is no in decision block 406, control is transferred to block 407 that performs normal processing before transferring control back to decision block 401.

If the answer in decision block 406 is yes, block 408 transmits the advertisement message to the terminal and transfers control to decision block 409. The latter decision block determines if the new web site has responded. If the answer is no, decision block 411 determines if there has been a request for additional information concerning the advertisement from the terminal. If the answer is no, control is transferred back to decision block 409. If the answer is yes in decision block 411, block 412 transmits the web site identification information to the terminal that defines where additional information may be found concerning the advertisement before transferring control back to decision block 409.

Returning to decision block 409, if the answer is yes in decision block 409, control is transmitted to block 503 of FIG. 5. The latter block removes the message from the terminal, and block 504 connects the terminal to the new web site before transferring control back to decision block 401 of FIG. 4.

Another embodiment of the invention is the utilization of an all fiber digital switching network such as disclosed in U.S. Patent No. 4,763,317. The local central node 110 of FIG. 1 and FIG. 10 of U.S. Patent No. 4,763,317 provide access to Internet providers. The wideband capabilities of central node service area 100's various units are utilized to provide to the network interface equipment 104 of FIGS. 1 and 8 the communication capability of providing high speed Internet access. The steps as illustrated in FIGS. 4 and 5 would be provided by controller 507 of remote node 103 of FIG. 9. Alternatively, the steps illustrated in FIGS. 4 and 5 would be performed by control complex 612 of FIG. 10. A personal computer is added to the existing units of network interface equipment 104.

## Claims

1. A method delivering advertisement messages via a digital switching network (103) that is providing Internet access to a plurality of Internet providers (104, 106) for a plurality of terminals (101,102), comprising the steps of:
detecting a service request by the digital switching network from a connected one of the plurality of terminals to one of the plurality of Internet providers where the plurality of Internet providers are connected to the digital switching network;
initiating processing of the service request by a server (211) in the digital switching network;
CHARACTERIZED BY
determining a first one of the advertisement messages to be transmitted to the requesting one of the plurality of terminals by the server; and
transmitting the determined first one of the advertisement messages to the requesting one of the plurality of terminals by the server.

2. The method of claim 1 further comprises the step of detecting by the server an indication from the requesting one of the plurality of terminals for additional information concerning the determined first one of the advertisement messages; and
transmitting by the server web site identification information designating where additional information can be obtained.

3. The method of claim 2 wherein the advertisement messages are multi-media messages.

4. The method of claim 3 wherein the digital switching network is broadband hybrid optical cable switching network (202,203,204,205,208,209).

5. The method of claim 3 wherein the digital switching network is an optical switching network.

6. The method of claim 4 wherein in the server is in a remote hub of the broadband hybrid optical cable switching network.

7. The method of claim 4 wherein in the server is in a headend hub of the broadband hybrid optical cable switching network.

8. The method of claim 4 or claim 5 further comprises detecting completion of the determined first one of the advertisement messages to the requesting one of the plurality of terminals;
the determining step further determining a second one of the advertisement messages; and
the transmitting step further transmitting the determined second one of the advertisement messages to the requesting one of the plurality of terminals.

9. The method of claim 4 or claim 5 wherein the one of the plurality of terminals is a personal computer.

10. The method of claim 4 or claim 5 wherein the one of the plurality of terminals is a digital television with integrated web capability.

11. An apparatus delivering advertisement messages via a digital switching network (103) that is providing Internet access to a plurality of Internet providers (104,106) or a plurality of terminals (101,102), comprising:
means for detecting a service request by the digital switching network from a connected one of the plurality of terminals to one of the plurality of Internet providers where the plurality of Internet providers are connected to the digital switching network;
means for initiating processing of the service request by a server (211) in the digital switching network;
CHARACTERIZED in that
means for determining a first one of the advertisement messages to be transmitted to the requesting one of the plurality of terminals by the server; and
means for transmitting the determined first one of the advertisement messages to the requesting one of the plurality of terminals by the server.

12. The apparatus of claim 11 further comprises the step of detecting by the server an indication from the requesting one of the plurality of terminals for additional information concerning the determined first one of the advertisement messages; and
means for transmitting by the server web site identification information designating where additional information can be obtained.

13. The apparatus of claim 12 wherein the advertisement messages are multi-media messages.

14. The apparatus of claim 13 wherein the digital switching network is broadband hybrid optical cable switching network.

15. The apparatus of claim 13 wherein the digital switching network is an optical switching network.

16. The apparatus of claim 14 wherein in the server is in a remote hub of the broadband hybrid optical cable switching network.

17. The apparatus of claim 14 wherein in the server is in a headend hub of the broadband hybrid optical cable switching network.

18. The apparatus of claim 14 or claim 15 further comprises means for detecting completion of the determined first one of the advertisement messages to the requesting one of the plurality of terminals;
the means for determining further determining a second one of the advertisement messages; and
the means for transmitting further transmitting the determined second one of the advertisement messages to the requesting one of the plurality of terminals.
